# EUROPÄISCHE PATENTSCHRIFT

(11) **EP 2 441 785 B1**
(45) Veröffentlichungstag und Bekanntmachung des Hinweises auf die Patenterteilung: **01.03.2017**
(21) Anmeldenummer: 11183753.0
(22) Anmeldetag: 04.10.2011
(51) Int. Cl.: C08G 18/08, C08G 18/79, C09J 175/06, C08G 18/50, C08G 18/70

(54) **Neue Dispersionsklebstoffe, ein Verfahren zu deren Herstellung und deren Verwendung**
New dispersion adhesives, method for their manufacture and application thereof
Nouvelles colles de dispersion, leur procédé de fabrication et d'utilisation

(30) Priorität: 13.10.2010 EP 10187405; 22.11.2010 EP 10192087
(43) Veröffentlichungstag der Anmeldung: 18.04.2012
(73) Patentinhaber: Rhein Chemie Rheinau GmbH, 68219 Mannheim (DE)
(72) Erfinder: Laufer, Wilhelm, 67158 Ellerstadt (DE); Schuster, Peter, 6487 Göschenen (CH); Scheffner, Christian, 69207 Sandhausen (DE)
(74) Vertreter: Siegers, Britta

(56) Entgegenhaltungen:
- EP-A1- 1 247 825
- EP-A1- 1 598 382
- EP-A1- 1 840 143
- EP-A2- 0 805 172
- WO-A1-01/77219
- WO-A1-01/77248
- WO-A1-2008/077766
- JP-A- 10 060 272
- US-A- 5 821 294
- US-A1- 2007 286 975
- US-A1- 2010 075 139

## Beschreibung

Die vorliegenden Erfindung betrifft-neuartige wäßrige Dispersionsklebstoffe, Verfahren zu deren Herstellung und deren Verwendung in der Möbel- und Automobilindustrie.

TDI-Uretdione, wie z.B. Desmodur® TT oder Addolink® TT werden bislang in Dispersionsklebstoffen hauptsächlich für den Einsatz in der Möbelindustrie eingesetzt, siehe EP 0 922 720A. Diese Anwendung wird z. B. in "Polyurethane - Lacke, Kleb- und Dichtstoffe", von Ulrich Meier-Westhues, (Technologie des Beschichtens), Hannover: Vincentz Network, (2007), Seiten 262 - 273, detailliert beschrieben. Diese Stoffe haben den Nachteil, dass sie kostspielig in der Herstellung und aufgrund der möglichen Aufspaltung von giftigem TDI nur eingeschränkt in der Automobilindustrie (Automabilinnenraum) einsetzbar sind.

Aufgabe der vorliegenden Erfindung war daher, kostengünstige Alternativen für wässrige Dispersionsklebstoffe vor allem im Bereich der Automobilindustrie bereitzustellen..

Überraschenderweise wurde nun gefunden, dass wässrige Dispersionsklabstoffe, enthaltend bestimmte Carbodiimide und Polyurethan-Dispersionen, die Nachteile des Standes der Technik nicht aufweisen und sich in hervorragender Weise als Dispersionsklebstoffe für den Einsatz in der Möbel- und Automobilindustrie eignen.

Gegenstand der vorliegenden Erfindung sind daher wässrige Dispersionsklebstoffe enthaltend mindestens eine Polyurethan-Dispersion und mindestens ein Carbodiimid der Formel (I)

R'-(-N=C-N-R-)ₘ-R" (I),

in der
in einer ganzen Zahl von 1 bis 500 entspricht,
R = Arylen, vorzugsweise C₆-C₁₅-Arylen und/oder C₇-C₁₁-Aralkylen,
R' = R-NCO, R-NHCONHR¹ oder R-NHCONR¹R² und
R" = -NCO, -NHCONHR¹ oder -NHCONR¹R² ist,
wobei in R' unabhängig voneinander R¹ und R³ gleich oder verschieden sind und einen C₁-C₆-Alkyl-, C₆-C₁₀-Cycloalkyl- oder C₇-C₁₈-Aralkylrest darstellen.

Ebenfalls einsetzbar sind auch Gemische von Carbodiimiden der Formel (I), inklusive der entsprechenden Oligomere und/oder Polymere.

Vorzugsweise eingesetzt werden dabei monomere Carbodiimide der Formel (I), die auf aromatischen und/oder aliphatischen Diisocyanaten basieren.

In einer besonders bevorzugten Ausführungsform der Erfindung entsprechen die Carbodiimide Verbindungen den Formeln (II) bis (IV) 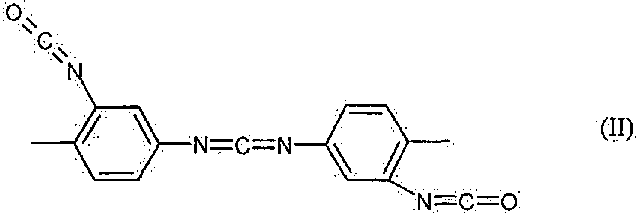 und/oder, 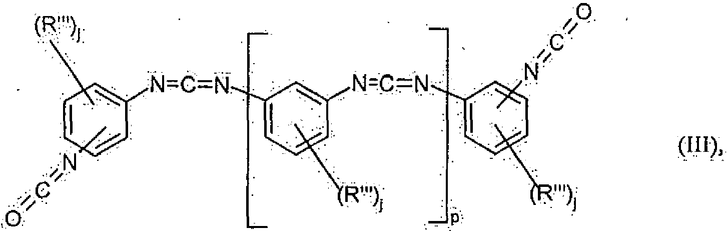
mit R'" = C₁-C₁₈-Alkylen, C₅-C₁₈-Cycloalkylen-, Arylen, vorzugsweise C₆-C₁₅-Arylen und/oder C₇-C₁₈-Aralkylen und
j innerhalb des Moleküls gleich oder verschieden.ist und 1 bis 5 bedeutet und
p = 0 bis 500 sein kann,
und/oder sterisch gehinderte Carbodiimide der Formel (IV)

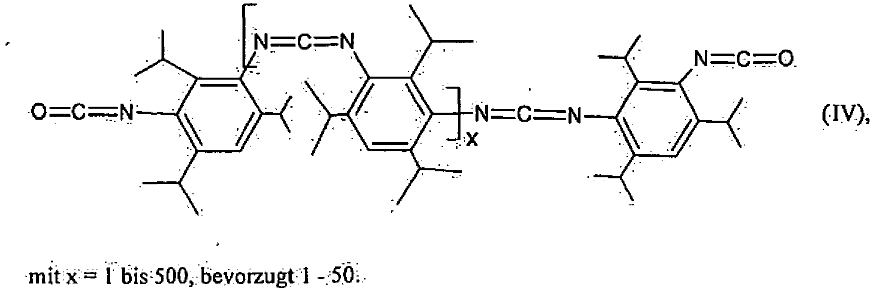

Herstellungsbedingt können die vorgenannten Carbodiimide der Formeln (I) bis (IV) auch in Gemischen aus monomeren, oligomeren und/oder polymeren Verbindungen anfallen. Diese Gemische sind vom Gegenstand der Erfindung mitumfasst.

Die Verbindungen nach Formel (I) bis (IV) sind kommerziell erhältlich, z.B. bei der Firma Rhein Chemie Rheinau GmbH oder lassen sich nach den dem Fachmann geläufigen Verfahren herstellen, wie z.B. beschrieben in DE-A-11 30 594 oder US 2 840 589 oder durch die Kondensation von Diisocyanaten unter Abspaltung von Kohlendioxid bei erhöhten Temperaturen, z.B. bei 40 °C bis 200 °C, in Gegenwart von Katalysatoren. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Verbindungen und/oder Polymeren eignen sich alle Diisocyanate, wobei im Rahmen der vorliegenden. Erfindung bevorzugt Carbodiimide und/oder Polycarbodiimide verwendet werden, die auf durch C₁- bis C₄-Alkyl substituierten aromatischen Isocyanaten aufbauen, wie z.B. 2,4-Toluylendiisocyanat (TDI), 2,6-Toluylendiisocyanat, ein Gemisch aus 2,4-Toluylendiisocyanat und 2,6-Toluylendiisocyanat, Xylylendiisocyanat, 2,6-Diisopropylphenyl-isocyanat, 2,4,6-Triisopropylphenyl-1,3-diisocyanat, 2,4,6-Triethylphenyl-1,3-diisocyanat, 2,4,6-Trimethyl-phenyl-1,3-diisocyanat, 2,4'-Diisocyanatodiphenylmethan, 1,5-Naphthalin-diisocyanat, 4,4'-Diphenylmethandiisocyanat, 2,4'-Diphenyl-methandiisocyanat, 2,2'-Diphenylmethandiisocyanat, 4,4'-Diphenyldimethyl-methandiisocyanat, 1',3-Phenylendiisocyanat, 1,4-Phenylendiisocyanat, 2,6-Diisopropylphenylen-isocyanat und 1,3,5-Triisopropylbenzol-2,4-diisocyanat oder deren Gemische basieren. Besonders bevorzugt ist es, wenn die Carbodiimide und/oder Polycarbodiimide auf 2,4-Toluylendiisocyanat und 2,6-Toluylendiisocyanat oder ein Gemisch aus 2,4-Toluylendiisocyanat und 2,6-Toluylendiisocyanat basieren.

In einer weiteren Ausführungsform der vorliegenden Erfindung ist es auch möglich, eine Mischung verschiedener Carbodiimide einzusetzen.

Die eingesetzten festen Carbodiimide weisen besonders bevorzugt eine Teilchengröße von <50µm auf.

In einer weiteren bevorzugten Ausführungsform der Erfindung können die Verbindungen der Formeln (I) bis (IV) in Form einer wäßrigen Dispersion vorliegen. In diesen Fällen beträgt der Wirkstoffgehalt vorzugsweise 20 bis 80%, besonders bevorzugt 40 bis 60%.

Bei den Polyurethan-Dispersionen im Sinne der Erfindung handelt es sich vorzugsweise um wässrige, ionische oder nicht ionische, polare Gruppen-haltige und/oder lösemittelhaltige-Polyurethane oder Polyesterpolyurethane, die auf aromatischen und/oder aliphatischen Isocyanaten, bevorzugt aliphatischen Isocyanaten, wie z. B. Hexamethylendiisocyanat, basieren. Diese Dispersionen sind kommerziell erhältlich, z.B. als "Dispercoll® U"-Typen von der Firma Bayer MaterialScience AG.

Polare Gruppen im Sinne der Erfindung sind z.B. Hydroxy-, Sulfonat,- Ether- oder Carboxylgruppen.

Die erfindungsgemäßen wässrigen Dispersionsklebstoffe weisen dabei vorzugsweise die folgende Zusammensetzung auf:
0,2 - 10 %, besonders bevorzugt 0,5 - 5% mindestens eines Carbodiimids der Formeln (I) - (IV) und
99,8 - 90 %, besonders bevorzugt 99,5 - 95% PU-Dispersion.

Dabei beträgt der Wirkstoffanteil in beiden Fällen vorzugsweise 20 bis 80%.

Die eingesetzten Carbodiimide der Formeln (I) bis (IV) sind vorzugsweise bei Raumtemperatur fest oder flüssig.

In einer weiteren bevorzugten Ausführungsform der Erfindung sind die festen Carbodiimide gemäß den Formeln (I) bis (IV) durch Umsetzung mit mindestens einem Amin oberflächendesaktiviert.

Für die Oberflächendesaktivierung (Mikroverkapselung) sind als Amin alle aminofunktionellen Verbindungen einsetzbar. Bevorzugt handelt es sich dabei um multifunktionelle primäre und sekundäre, besonders bevorzugt multifunktionelle aliphatische Amine. Erfindungsgemäß geeignete Amine sind insbesondere ausgewählt aus der Gruppe von cyclischen und aliphatischen, geradkettigen oder verzweigten (C₂-C₁₄)-Alkylaminen, -diaminen und -polyaminen, insbesondere (C₂-C₁₀)-Alkylaminen, -diaminen und -polyaminen, vorzugsweise (C₂-C₆)-Alkylaminen, -diaminen und -polyaminen, wobei die Alkylkette zumindest teilweise oder aber vollständig durch Heteroatome, insbesondere Sauerstoff oder Schwefel, unterbrochen sein kann und/oder wobei die Alkylkette weitere Substituenten, wie beispielsweise Hydroxylgruppen, Carboxylgruppen, Halogen oder dergleichen enthalten kann.

Als Beispiele für erfindungsgemäß geeignete Amine lassen sich die folgenden Verbindungen nennen: 2-Pentamethylen-1,5-diamin und dessen Isomere und Homologe wie z. B. 1,6-Hexamethylendiamin; Di-sek.-Butylamin; Ethylendiamin; 1,3-Propylendiamin; Diethylen-triamin; Triethylentetramin; 3,3'-Dimethyl-4,4'-diaminodicyclohexylmethan; Methylnonandiamin; Isophorondiamin; 4,4'-Diaminodicyclohexylmethan; Alkanolamine und -diamine wie Ethanolamin und Diethanolamin und/oder Amidoamine. Hierunter ganz besonders bevorzugt sind das 2-Pentamethylen-1,5-diamin und dessen Isomere und Homologe wie z. B. 1,6-Hexamethylendiamin.

Besonders bevorzugt handelt es sich dabei um multifunktionelle primäre und sekundäre, besonders bevorzugt multifunktionelle aliphatische Amine, wie z.B. Jeffamine® T 403 der Firma Huntsmann, Diisopropanolamin der Firma BASF AG oder Amidoamine, wie Versamid® 140 der Firma Cognis oder Euretek 505 der Firma Witco. Dabei handelt es sich insbesondere um Verbindungen mit hydrophilen Gruppen, wie insbesondere Aminogruppen oder Hydroxylgruppen, die mit den freien Isocyanatgruppen des festen. Diisocyanats reagieren können und somit eine Oberflächenhülle auf den Isocyanaten ausbilden, welche die Isocyanate zunächst desaktiviert, so z.B. Amine, Diamine und Polyamine.

In einer bevorzugten Ausführungsform der Erfindung wird als Oberflächendesaktivierungsmittel ein niedermolekulares Mono-, Di- oder Polyamin mit einer oder mehreren primären und/oder sekundären Aminogruppe(n) verwendet, und zwar in solchen Mengen, dass der Desaktivierungsgrad (DG), berechnet als Äquivalentverhältnis von Aminogruppen des Oberflächendesaktivierungsmittels zu den Isocyanat- und/oder Carbodiimidgruppen des zu desaktivierenden Carbodiimides (n NH₂/n NCO), zwischen 0,2 und 8 Äquivalent-% liegt.

Insbesondere kann das Oberflächendesaktivierungsmittel ein Molekulargewicht bis MG 600 g/mol aufweisen.

Dabei sind Konzentrationen an Oberflächandesaktivierungsmittel (Amin), bezogen auf die Menge an Haftvermittler, von 1 bis 10 Gew.% bevorzugt, insbesondere bevorzugt 2 bis 5 Gew.%.

Die Oberflächendesaktivierung erfolg vorzugsweise durch Zugabe des Amins zu.einer wässrigen Dispersion des Carbodiimids, das gegebenenfalls noch Dispergiermittel und Antiabsetzmittel enthält, unter Rühren und/oder Vermahlen. Es ist aber auch möglich, die Oberflächendesaktivierung durch Zugabe des Amins in eine organische Dispersion, z.B. in Alkohol, Toluol, etc., des Carbodiimides durchzuführen.

Für den Rühr-/Vermahlprozess können handelsübliche Maschinen eingesetzt werden, wie z.B. Perlmühle, Dissolver oder Blattrührer.

Die Deaktivierung der Carbodiimide erfolgt in an sich bekannter Weise, siehe insbesondere EP 0 205 970 A und US-A-4 888 124, deren Inhalt hiermit in vollem Umfang durch Bezugnahme eingeschlossen ist, z.B. durch:
a) Dispergieren des pulverförmigen festen Carbodiimides in einer Lösung des Amins oder
b) Zugabe des Amins oder einer Lösung des Amins zu einer Dispersion der festen feinteiligen Carbodiimides.

Die Oberflächendesaktivierung kann dabei in Wasser und/oder aber auch in organischen Lösemitteln erfolgen.

In einer weiteren Ausführungsform der vorliegenden Erfindung enthalten die erfindungsgemäßen wässrigen Dispersionsklebstoffe zusätzlich Netz- und Dispergiermittel, wie z.B. Tamol® NN 9104 der Firma BASF AG oder Aerosol® OT45 der Firma Cytec Surface Specialities GmbH, Dispersogen® HR der Firma Clariant International Ltd., und/oder Stabilisatoren, Emulgatoren, Verdicker, wie z.B. Antiabsetzmittel, wie u.a. Borchi®Gel ALA (OMG Borchers GmbH) oder Kelzan® S, erhältlich bei der Firma Monsanto oder auch Tragacanth, erhältlich bei der Firma R.T. Vanderbilt, und/oder Entschäumer.

Die Anteile an Stabilisatoren, Emulgatoren, Verdicker und/oder Entschäumer liegen vorzugsweise bei 0,1 - 10%.

Gegenstand der vorliegenden Erfindung ist zudem ein Verfahren zur Herstellung der erfindungsgemäßen wässrigen Dispersionskiebstoffe, bei dem mindestens eine Verbindung der Formeln (I) bis (IV), gegebenenfalls in Form einer wäßrigen Dispersion und/oder gegebenenfalls in mikroverkapselter Form in die Polyurethan-Dispersion, die gegebenenfalls weitere Zusatzstoffe enthält, eingerührt wird.

In den Fällen, in denen die mikroverkapselten Carbodiimide der Formeln (I) bis (IV) eingesetzt werden sollen, können die erfindungsgemäßen wässrigen Dispersionsklebstoffe auch wie folgt hergestellt werden:
Dabei wird/werden zunächst das/die Carbodiimide der Formeln (I) bis (IV) gegebenenfalls in Form einer wäßrigen Dispersion in die Polyurethan-Dispersion eingerührt und anschließend durch die vorgenannte Umsetzung mit Aminen oberflächendesaktiviert.

Für das Einrühren können dabei alle handelsüblichen Mischaggregate, wie z.B. Dissolver eingesetzt werden.

Die Herstellung einer wäßrigen Dispersion mit Carbodiimiden/Verbindungen der Formeln (I) bis (IV) erfolgt dabei nach den dem Fachmann geläufigen Verfahren, gegebenenfalls in Anwesenheit weiterer Additive, wie z.B. Netz- und Dispergiermittel, Antiabsetzmittel, Entschäumer, etc. in handelsüblichen Aggregaten, wie z.B. Dissolvern.

Bei der Herstellung liegt die Temperatur vorzugsweise im Bereich von 5 bis 50 °C.

Das Einrühren der Carbodiimide erfolgt dabei mit handelsüblichen Mischaggregaten, wie z.B. Rührkessel und Dispergatoren.

Gegenstand der vorliegenden Erfindung ist zudem die Verwendung der erfindungsgemäßen wäßrigen Dispersionsklebstoffe, die gegebenenfalls weitere Zusatzstoffe enthalten, in der Möbel- und Automobilindustrie, der Schuhfertigung oder auch in der Textilindustrie; z.B. zur Herstellung von Gewebe/Folienverbunden.

Dabei sind folgende Anwendungsgebiete bevorzugt: Arbeitsplatten und Frontverkleidung für Küchen und Armaturenbrett im Automobilbau.

Gegenstand der Erfindung sind auch Verfahren zur Herstellung von Arbeitsplatten und Frontverkleidungen für Küchen und das Armaturenbrett im Automobilbau bei denen mindestens eine der erfindungsgemäßen wässrigen Dispersionen auf die Oberfläche des zu verklebenden. Materials aufgebracht wird. Das Aufbringen geschieht dabei vorzugsweise durch Auftragen oder aufsprühen. Bei dem zu beschichtenden Material kann es sich z. B. um Holz öder Laminat handeln, welches mit anderen Materialien, wie z. B. weiterem Laminat verklebt wird.

Die Art des Aufbringens auf die Oberfläche ist zudem auch beschrieben in "Polyurethane - Lacke, Kleb- und Dichtstoffe", von Ulrich Meier-Westhues, (Technologie des Beschichtens), Hannovel. Vincentz Network, (2007), Seiten 266 - 273.

Die nachfolgenden Beispiele dienen der Erläuterung der Erfindung, ohne dabei limitierend zu wirken.

### Ansführungsbeispiele:

### Verwendete Chemikalien:

TDI-Carbodiimid, ein Carbodiimid auf Basis 2,4-Toluytendiisocyanat gemäß Formel (II),
Addolink® TT, ein TDI-Uretdion, erhältlich bei der Fa. Rhein Chemie Rheinau GmbH,
Stabaxol® P 200, ein Carbodiimid auf Basis von 1,3-Tetramethylxylylendiisocyanat (TMXDI) erhältlich bei der Fa. Rhein Chemie Rheinau GmbH,
Carbodilite LA-01, ein Carbodiimid auf Basis Dicyclohexylmethan-4,4'-diisocyanat (H12MDI), das noch Isocyanatgruppen enthält, erhältlich bei der Fa. Nisshinbo Chemical Inc.,
Carbodilite HMV8 CA, ein Carbodiimid auf Basis Dicyclohexylmethan-4,4'-diisocyanat (H12MDI) erhältlich bei der Fa. Nisshinbo Chemical Inc.,
Tween 85 , Netz/Dispergiermittel, erhältlich bei der Firma Münzing Chemie GmbH,
Kelzan® S, Antiabsetzmittel, erhältlich bei der Firma Monsanto,
Jeffamin® T 403, Polyetheramin zum Oberflächendesaktivierung, erhältlich bei der Firma Huntsman International LLC,
Agitan 281, Entschäumer, erhältlich bei der Firma Fluka,
Dispercoll U53, eine 40%ige Dispersion eines anionischen hochmokularen Polyurethan-Dispersion, erhältlich bei der Firma BayerMaterialScience AG sowie
Borchi Gel ® L 75, Antiabsetzmittel, erhältlich bei der Firma OMG Borchers GmbH.

Tabelle 1 fasst die Einsatzmengen zur Herstellung einer wässrigen Addolink ® TT bzw. TDI-Carbodiimid-Dispersion zusammen:

**Tabelle 1:**

| Material | Bsp. 1 | Bsp. 2 | Bsp. 3 | Bsp. 4 | Bsp. 5 |
|---|---|---|---|---|---|
| | (erf.) | (VV) | (VV) | (VV) | (VV) |
| TDI-Carbodiimid | 40 | | | | |
| Addolink TT | | 40 | | | |
| Stabaxol P 200 | | | 40 | | |
| Carbodilite LA-01 | | | | 40 | |
| Carbodilite HMV 8CA | | | | | 40 |
| Wasser | 52,6 | 52,6 | 60 | 52,6 | 55,0 |
| Tween 85 | 0,5 | 0,5 | | 0,5 | 0,5 |
| Agitan 281 | 0,45 | 0,45 | | 0,45 | 0,45 |
| Jeffamin® T 403 | 2,5 | 2,5 | | 2,5 | |
| Kelzan® S, 3% in Wasser | 4 | 4 | | 4 | 4 |

| | | | | | |
|---|---|---|---|---|---|
| VV= Vergleichsbeispiel, erf= erfindungsgemäß, die Einsatzmengen sind in Gew. Teilen angegeben. | | | | | |

In den Beispielen 1, 2, 4 und 5 wurden Wasser und Netz/Dispergiermittel und Entschäumer (Agitan 281 und Tween 85) zusammengegeben und gelöst/gemischt. Anschließend wurde der Vernetzer, zugesetzt und im Dissolver homogenisiert. Anschließend wurde außer im Beispiel 5 Jeffamin® T 403 zugegeben und unter Vermeidung von Scherkräften eingemischt. Danach wurde die frisch hergestellte Kelzan® S- Präparation eingemischt und homogenisiert. Im Beispiel 3 wurde der Vernetzer in Wasser gelöst.

### Beispiel 6: erfindungsgemäß

In 96,5 Teile Dispercoll U53 wurden 2,5 Teile der Dispersion aus Beispiel 1 zusammen mit einem (1) Teil Borchi Gel ® L 75 verrührt.

### Beispiel 7: Vergleich

In 96,5 Teile Dispercoll U53 wurden 2,5 Teile der Dispersion aus Beispiel 2 zusammen mit einem (1) Teil Borchi Gel ® L 75 verrührt.

### Beispiel 8: Vergleich

In 96,5 Teile Dispercoll U53 wurden 2,5 Teile der Lösung aus Beispiel 3 zusammen mit einem (1) Teil Borchi Gel ® L 75 verrührt.

### Beispiel 9: Vergleich

In 96,5 Teile Dispercoll U53 wurden 2,5 Teile der Dispersion aus Beispiel 4 zusammen mit einem (1) Teil Borchi Gel ® L 75 verrührt.

### Beispiel 10: Vergleich

In 96,5 Teile Dispercoll U53 wurde 2,5 Teile der Dispersion aus Beispiel 5 zusammen mit einem (1) Teil Borchi Gel ® L 75 verrührt.

### Beispiel 11: Vergleich

99,0 Teile Dispercoll U53 werden zusammen mit einem (1) Teil Borchi Gel ® L 75 verrührt.

Mit diesen Dispersionen wurde ein Wärmestandfestigkeitstest durchgeführt. Zu diesem Zweck werden eine Holz- mit einer PVC-Platte verklebt und dabei auf einer Klebefläche von 20X20 mm 0,15 g der Dispersionsklebstoffe aus dem Bsp. 6, 7, 8, 9, 10 oder 11 auf der Hotzseite und 0,08 g des Dispersionsklebstoffes aus dem Bsp. 6, 7, 8, 9, 10 oder 11 auf der PVC-Seite aufgetragen. Anschließend werden die Platten bei 80 °C mit einem 5 kg Gewicht 60 Minuten gepresst.

An die so hergestellten Prüfkörper werden jeweils 5 kg schwere Balastkörper im Trockenschrank gehängt. Beginnend mit einer Temperatur von 40°C wird mit einer Aufheizgeschwindigkeit von 10 K/h erwärmt.

Gemessen wird die Temperatur, bei der die Verklebung versagt und die Gewichte herunterfallen. Die Testergebnisse sind in Tabelle 3 dargstellt:

**Tabelle 3:**

| Material | Bsp. 6 | Bsp. | Bsp. 8 | Bsp.9 | Bsp. 10 | Bsp. 11 |
|---|---|---|---|---|---|---|
| | (erf) | 7 (VV) | (VV) | (VV) | (VV) | (VV) |
| Wärmestandfestigkeitstest | 82,5 | 64,6 | 57,2 | 53,6, | 52,7 | 50,8 |
| Temperatur in °C. | | | | | | |

| | | | | | | |
|---|---|---|---|---|---|---|
| VV= Vergleichsbeispiel, erf= erfindungsgemäß | | | | | | |

Die Versuchsergebnisse zeigen eindeutig, dass bei gleicher Menge, die erfindungsgemäßen, wässrigen Dispersionsklebstoffe eine höhere Wärmestandfestigkeit ausweisen.

## Patentansprüche

1. Wässrige Dispersionsklebstoffe enthaltend mindestens eine Polyurethan-Dispersion und mindestens ein Carbodiimid der Formel (I)
R'-(-N=C=N-R-)ₘ-R" (I),
in der
m einer ganzen Zahl von 1 bis 500 entspricht,
R = Arylen und/oder C₇-C₁₁-Aralkylen,
R' = R-NCO, R-NHCONHR¹ oder R-NHCONR¹R² und
R"= -NCO, -NHCONHR¹ oder -NHCONR¹R² ist,
wobei in R' unabhängig voneinander R¹ und R² gleich oder verschieden sind und einen C₁-C₆-Alkyl-, C₆-C₁₀-Cycloalkyl- oder C₇-C₁₈-Aralkylrest darstellen.

2. Wässrige Dispersionsklebstoffe nach Anspruch 1, **dadurch gekennzeichnet, dass** es sich dabei um Carbodiimide der Formeln (II), (III) und/oder (IV) 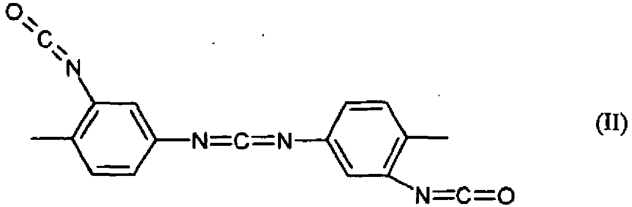 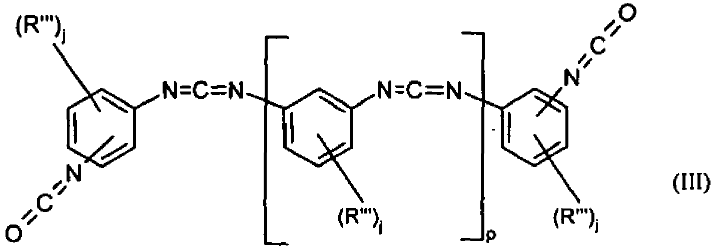 mit R'" = C₁-C₁₈-Alkylen, C₅-C₁₈-Cycloalkylen-, Arylen und/oder C₇-C₁₈-Aralkylen und j innerhalb des Moleküls gleich oder verschieden ist und 1 bis 5 bedeutet und p = 0 bis 500 sein kann, 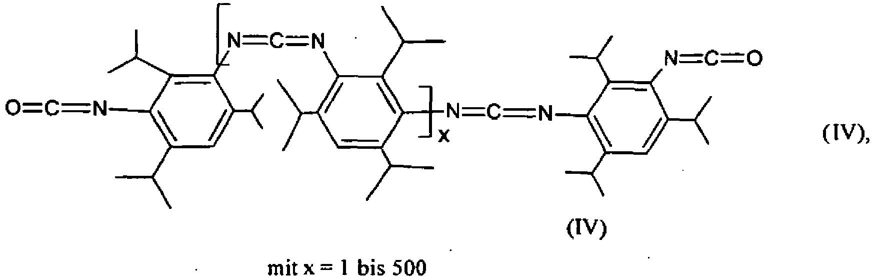 handelt.

3. Wässrige Dispersionsklebstoffe nach Anspruch 1 oder 2, **dadurch gekennzeichnet, dass** die Carbodiimide der Formeln (I) bis (IV) durch Umsetzung mit mindestens einem Amin oberflächendesaktiviert werden.

4. Wässrige Dispersionsklebstoffe nach einem oder mehreren der Ansprüche 1 bis 3, **dadurch gekennzeichnet, dass** die Carbodiimide der Formeln (I) bis (IV) in Form einer wäßrigen Dispersion vorliegen.

5. Wässrige Dispersionsklebstoffe nach einem oder mehreren der Ansprüche 1 bis 4, **dadurch gekennzeichnet, dass** es sich bei der Polyurethan-Dispersion im Wesentlichen um eine wäßrigen Dispersion handelt.

6. Wässrige Dispersionsklebstoffe nach einem oder mehreren der Ansprüche 1 bis 4, **dadurch gekennzeichnet, dass** es sich bei der Polyurethan-Dispersion um wässrige, ionische oder nicht ionische, polare Gruppen-haltige und/oder lösemittelhaltige Polyurethane oder Polyesterpolyurethane handelt, die auf aromatischen und/oder aliphatischen Isocyanaten, basieren.

7. Wässrige Dispersionsklebstoffe nach einem oder mehreren der Ansprüche 1 bis 4, enthaltend zusätzlich Stabilisatoren, Emulgatoren, Verdicker und/oder Entschäumer.

8. Verfahren zur Herstellung der wässrige Dispersionsklebstoffe nach einem oder mehreren der Ansprüche 1 bis 7, **dadurch gekennzeichnet**, bei dem mindestens ein Carbodiimid der Formeln (I) bis (IV), gegebenenfalls in Form einer wäßrigen Dispersion und/oder in oberflächendesaktivierter Form in die Polyurethan-Dispersion, die gegebenenfalls weitere Zusatzstoffe enthält, eingerührt wird.

9. Verwendung der wässrigen Dispersionsklebstoffe nach einem oder mehreren der Ansprüche 1 bis 7 in der Möbel-, Textil- und Automobilindustrie und/oder in der Schuh fertigung.

## Claims

1. Aqueous dispersion adhesives comprising at least one polyurethane dispersion and at least one carbodiimide of the formula (I)
R'-(-N=C=N-R-)ₘ-R" (I),
in which
m corresponds to an integer from 1 to 500,
R = arylene and/or C₇-C₁₁ aralkylene,
R' = R-NCO, R-NHCONHR¹ or R-NHCONR¹R² and
R" = -NCO, -NHCONHR¹ or -NHCONR¹R²,
where in R', independently of one another, R¹ and R² are identical or different and represent a C₁-C₆ alkyl, C₆-C₁₀ cycloalkyl or C₇-C₁₈ aralkyl radical.

2. Aqueous dispersion adhesives according to Claim 1, **characterized in that** said carbodiimide comprises carbodiimides of the formulae (II), (III) and/or (IV) 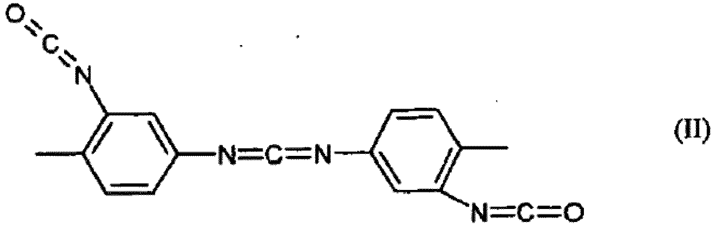 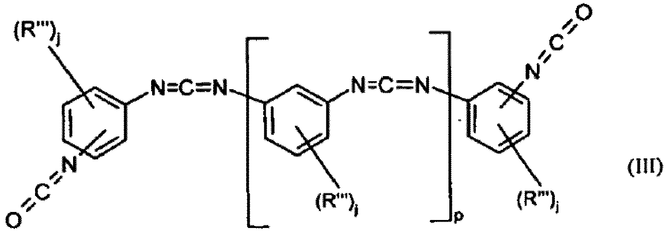 where R'" = C₁-C₁₈ alkylene, C₅-C₁₈ cycloalkylene, arylene and/or C₇-C₁₈ aralkylene and j within the molecule is identical or different and denotes 1 to 5, and p can be = 0 to 500, 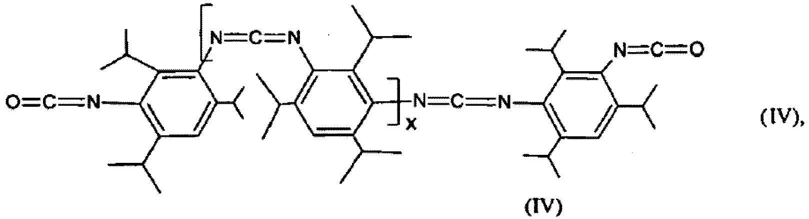 where x = 1 to 500.

3. Aqueous dispersion adhesives according to Claim 1 or 2, **characterized in that** the carbodiimides of the formulae (I) to (IV) are surface-deactivated by reaction with at least one amine.

4. Aqueous dispersion adhesives according to one or more of Claims 1 to 3, **characterized in that** the carbodiimides of the formulae (I) to (IV) are present in the form of an aqueous dispersion.

5. Aqueous dispersion adhesives according to one or more of Claims 1 to 4, **characterized in that** the polyurethane dispersion is substantially an aqueous dispersion.

6. Aqueous dispersion adhesives according to one or more of Claims 1 to 4, **characterized in that** the polyurethane dispersion comprises aqueous, ionic or non-ionic polyurethanes or polyester polyurethanes which contain polar groups and/or contain solvent, and which are based on aromatic and/or aliphatic isocyanates.

7. Aqueous dispersion adhesives according to one or more of Claims 1 to 4, further comprising stabilizers, emulsifiers, thickeners and/or defoamers.

8. Process for preparing the aqueous dispersion adhesives according to one or more of Claims 1 to 7, **characterized in that** at least one carbodiimide of the formulae (I) to (IV), optionally in the form of an aqueous dispersion and/or in surface-deactivated form, is incorporated by stirring into the polyurethane dispersion, which optionally comprises further additives.

9. Use of the aqueous dispersion adhesives according to one or more of Claims 1 to 7 in the furniture, textile and automotive industries and/or in footwear manufacture.

## Revendications

1. Adhésifs en dispersion aqueuse, contenant au moins une dispersion de polyuréthane et au moins un carbodiimide de formule (I)
R'-(-N=C=N-R-)ₘ-R" (I),
dans laquelle
m correspond à un nombre entier de 1 à 500,
R = arylène et/ou C₇-C₁₁-aralkylène,
R' = R-NCO, R-NHCONHR¹ ou R-NHCONR¹R² et
R" = -NCO, -NHCONHR¹ ou -NHCONR¹R²,
R¹ et R² dans R' étant, indépendamment l'un de l'autre, identiques ou différents et représentant un radical C₁-C₆-alkyle, C₆-C₁₀-cycloalkyle ou C₇-C₁₈-aralkyle.

2. Adhésifs en dispersion aqueuse selon la revendication 1, **caractérisés en ce qu'**il s'agit de carbodiimides des formules (II), (III) et/ou (IV) 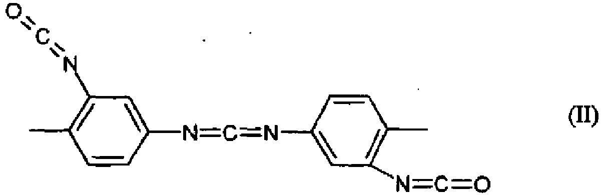 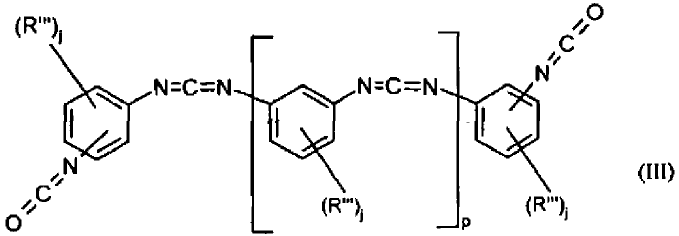 avec R'" = C₁-C₁₈-alkylène, C₅-C₁₈-cycloalkylène, arylène et/ou C₇-C₁₈-aralkylène et les indices j dans la molécule étant identiques ou différents et signifiant 1 à 5 et p pouvant être = 0 à 500,

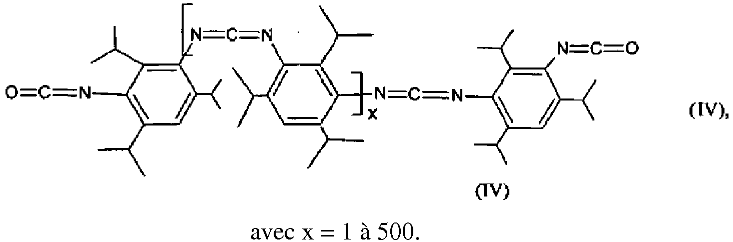

3. Adhésifs en dispersion aqueuse selon la revendication 1 ou 2, **caractérisés en ce que** les carbodiimides des formules (I) à (IV) sont désactivés en surface par transformation avec au moins une amine.

4. Adhésifs en dispersion aqueuse selon l'une ou plusieurs des revendications 1 à 3, **caractérisés en ce que** les carbodiimides des formules (I) à (IV) se trouvent sous forme d'une dispersion aqueuse.

5. Adhésifs en dispersion aqueuse selon l'une ou plusieurs des revendications 1 à 4, **caractérisés en ce qu'**il s'agit, pour la dispersion de polyuréthane, essentiellement d'une dispersion aqueuse.

6. Adhésifs en dispersion aqueuse selon l'une ou plusieurs des revendications 1 à 4, **caractérisés en ce qu'**il s'agit, pour la dispersion de polyuréthane, de polyuréthanes ou de polyester-polyuréthanes aqueux, ioniques ou non ioniques, contenant des groupes polaires et/ou contenant des solvants, qui sont à base d'isocyanates aromatiques et/ou aliphatiques.

7. Adhésifs en dispersion aqueuse selon l'une ou plusieurs des revendications 1 à 4, contenant en outre des stabilisants, des émulsifiants, des épaississants et/ou des antimousses.

8. Procédé pour la préparation des adhésifs en dispersion aqueuse selon l'une ou plusieurs des revendications 1 à 7, **caractérisé en ce que** ledit au moins un carbodiimide des formules (I) à (IV) est délayé, le cas échéant sous forme d'une dispersion aqueuse et/ou sous forme désactivée en surface, dans la dispersion de polyuréthane qui contient le cas échéant d'autres additifs.

9. Utilisation des adhésifs en dispersion aqueuse selon l'une ou plusieurs des revendications 1 à 7 dans l'industrie des meubles, des textiles et des automobiles et/ou dans la fabrication des chaussures.
